# EUROPÄISCHE PATENTSCHRIFT

(11) **EP 0 583 262 B1**
(45) Veröffentlichungstag und Bekanntmachung des Hinweises auf die Patenterteilung: **01.02.1995**
(21) Anmeldenummer: 92908143.8
(22) Anmeldetag: 03.04.1992
(51) Int. Cl.: B01D 35/26, B01D 29/11, B01D 29/64, B01D 29/66, B01D 29/82

(54) **VORRICHTUNG UND VERFAHREN ZUR TRENNUNG VON INSBESONDERE FESTEN BZW. KOAGULIERTEN INHALTSSTOFFEN VON FLÜSSIGKEITEN UND/ODER ZUM AUFKONZENTRIEREN VON LÖSUNGEN MIT EINEM SCHNECKENFÖRDERER**
DEVICE AND PROCESS USING A WORM CONVEYOR FOR SEPARATING MATERIALS, IN PARTICULAR SOLID OR COAGULATED MATERIALS, FROM LIQUIDS AND/OR FOR CONCENTRATING SOLUTIONS
PROCEDE ET DISPOSITIF DE SEPARATION DE SUBSTANCES NOTAMMENT SOLIDES OU COAGULEES CONTENUES DANS DES LIQUIDES ET/OU DE CONCENTRATION DE SOLUTIONS AU MOYEN D'UNE VIS CONVOYEUSE

(30) Priorität: 05.04.1991 DE 4110943
(43) Veröffentlichungstag der Anmeldung: 23.02.1994
(73) Patentinhaber: Nagy, Adalbert, D-46325 Borken (DE)
(72) Erfinder: Nagy, Adalbert, D-46325 Borken (DE)
(74) Vertreter: Schumacher, Horst, Dr. Dipl.-Phys.
(86) Internationale Anmeldenummer: EP9200758
(87) Internationale Veröffentlichungsnummer: WO9217264

(56) Entgegenhaltungen:
- DE-A- 1 653 903
- DE-A- 2 155 792
- GB-A- 1 063 975

## Beschreibung

Die Erfindung betrifft eine Vorrichtung sowie ein Verfahren zur Trennung von insbesondere festen bzw. koagulierten Inhaltsstoffen von Flüssigkeiten und/oder zum Aufkonzentrieren von Lösungen mit einem Schneckenförderer.

Ein derartiges System ist aus der noch nicht veröffentlichten deutschen Patentanmeldung DE-A-39 43 416.8-45 bekannt und dient dazu, in einer kontinuierlich arbeitenden Verfahrensstufe zu einem möglichst stark entwässerten Konzentrat von in der Flüssigkeit zunächst enthaltenen Inhaltsstoffen zu gelangen, wie sie z.B. in Gülle, Abwässern und dünnflüssigen Schlämmen enthalten sind.

Bekannte Systeme, die z.B. nach dem Prinzip der Druckfiltration arbeiten, haben u.a. den Nachteil hoher Kapitalkosten. Die bekannten Systeme arbeiten in der Regel diskontinuierlich, wobei während des Aufbaus des Filterkuchens die Durchsatzleistungen abzunehmen pflegen. Die Filterflächen müssen nach Entfernung des Filterkuchens regelmäßig gereinigt werden. Auch Verbesserungsmaßnahmen der Filtrationsleistung, wie die Vergrößerung der Porosität des Filterkuchens, Verkleinerung der Oberflächenspannung des Wassers oder Vergrößerung der Druckdifferenzen, können diese Nachteile nicht grundsätzlich beheben und weisen den weiteren Nachteil erheblichen Energieaufwandes auf.

Die Herstellung von Reinstwasser erfolgt durch Membranfiltration nach dem Prinzip der Umkehrosmose oder der Ultrafiltration. Die industrielle Nutzung dieser Technik erwieß sich, wegen ihrer begrenzten Bearbeitungskapazität und hohe Kosten als unwirtschaftlich. Insbesondere problematisch ist die Verwendung der Membranfiltration bei sehr großen Flüssigkeitsmengen.

Davon ausgehend ist es Aufgabe der Erfindung, einem kontinuierlich arbeitenden Prozeß der eingangs genannten Art zu ermöglichen.

Zur Lösung dieser Aufgabe wird eine Vorrichtung mit den Merkmalen des Patentanspruchs 1 vorgeschlagen.

Die erfindungsgemäße Vorrichtung hat u.a. folgende Vorteile:
- kompakter Aufbau;
- arbeitet unabhängig von den Flüssigkeits- bzw. Feststoffcharakteristika;
- arbeitet ohne Sedimentations-, Klär- oder Eindickvorgang:
- Endprodukte können in umweltfreundlichen Formen erhalten werden;
- gereinigte Flüssigkeit ist in der Regel von jeglichen Feststoffen, gelösten Substanzen und Giftstoffen befreit;
- entwässertes Produkt kann mit sehr geringer Restfeuchtigkeit erhalten werden;
- Schadstoffe können als Monokonzentrate differenziert abgetrennt werden.

Das System benötigt - in der Regel - lediglich eine vorgeschaltete chemische Koagulations- und/oder Flockulationsstufe und/oder Prozeßflüssigkeit wird unter Verwendung von Reaktionstrennmitteln abgespalten.

Das erfindungsgemäße System ist vorzugsweise für die Behandlung von Abwasser und Prozeßflüssigkeiten verwendbar wie:
- kommunale Abwässer,
- Abwässer aus Farben- und Lackfabriken,
- Abwässer aus Schlachtereien und aus Nahrungsmittelindustrie,
- Abwässer aus Papierfabriken, Waschmittelfabriken, Kunststoffindustrie und Textilindustrie,
- Abwässer aus der Holzverarbeitung, Holzfabriken, Holzschleifereien,
- Bohr-, Schneid-, Schleif-, und ähnlichen Emulsionen,
- Güllesuspensionen,
- Abwässer aus den technischen Bereichen, Steine, Erde, Kohle, Glas etc.

Vor allem im Bereich der Trennung der Fest/Flüssig-Phase, des Eindickens, des Entwässerns von wässrigen Lösungen bzw. der Abtrennung oder Gewinnung von Giften, Metallen und ähnlichem aus Abwässern wird durch die Erfindung ein wesentlicher Beitrag zum Recycling und zum Umweltschutz erzielt.

Die Erfindung basiert auf dem Grundgedanken, den Prozeß des Aufkonzentrierens bzw. Eindickens in einer sogenannten Exzenterschneckenpumpe vorzunehmen und entlang der Förderstrecke innerhalb der Pumpe Flüssigkeit abzuscheiden, wobei die Geometrie der Exzenterschneckenpumpe - grundsätzlich - dieselbe sein kann wie bei den bekannten Exzenterschneckenpumpen, d.h., daß der Durchmesser und die Gangtiefe des Rotors sowie entsprechend des Stators der Exzenterschneckenpumpe auf ihrer gesamten Länge im wesentlichen konstant sind.

Exzenterschneckenpumpen sind als solche bekannt, z.B. aus der DE-A-23 31 585 A1. Aufbau und Wirkungsweise sowie Anwendungsmöglichkeiten solcher Exzenterschneckenpumpen sind in den Werksschriften "NETZSCH-MOHNOPUMPEN" NM 008/01, NM 005/01, NM 00 10/1, NM 0 88 01 sowie weiteren Werksschriften dieser Druckschriftenreihe beschrieben, so daß auf die grundsätzliche Stator-Rotor-Geometrie hier nicht im einzelnen eingegangen werden muß.

Gemäß einer besonders bevorzugten Ausführungsform der Erfindung nehmen Durchmesser und Gangtiefe des Rotors sowie entsprechend des Stators der Exzenterschneckenpumpe von der Eintritts- zur Austrittsseite der Förderschnecke hin ab, wobei sich die Exzentrizität des Rotors und des Stators vorzugsweise kontinuierlich ändert. Insbesondere kann dem sich hinsichtlich der Exzentrizität kontinuierlich ändernden Bereich des Rotors und des Stators ein Bereich konstanter Exzentrizität, also konventioneller Geometrie des Rotors und des Stators vorausgehen. Exzenterschneckenpumpen der vorgenannten Art stellen bereits auch für sich genommen, d. h. ohne einen im Sinne der Erfindung permeablen Stator bzw. Rotor eine für viele Anwendungen besonders vorteilhafte Anordnung dar.

Gemäß einer besonders einfachen und wenig aufwendigen Ausführungsform der Erfindung wird der von Hause aus in der Regel aus Gummi oder einem ähnlichen elastischen Werkstoff bestehende Stator durch einen porösen Stator ersetzt und wird das den Stator umgebene Gehäuse für den Durchtritt von Flüssigkeit durchlässig gemacht, z.B. mit Siebbohrungen, Schlitzen oder der gleichen versehen. Es ist sogar denkbar, einen herkömmlichen Stator einer porösmachenden Behandlung zu unterziehen, z.B. einem Schwel- und gegebenenfalls einem Aktivierungsprozeß, wie er von der Herstellung poröser insbesondere solchen auf kohlenstoffhaltiger Basis bekannt ist. Derartige Techniken zur Herstellung von für Gase oder Flüssigkeiten permeablen Werkstoffen sind u.a. aus an der Bergbau-Forschung-GmbH in Essen durchgeführten Arbeiten wie z.B. den Dissertationen von Schumacher: "Anwendung von porösen Kohlenstoffmembranrohren mit definiert einstellbarem Makroporensystem in der Gasphasenpermeation", Aachen 1976, und Wybrands "Untersuchungen zur Ultrafiltration von organisch belasteten wässrigen Lösungen mit Kohlenstoffmembranen", Aachen 1980, beschrieben.

Zweckmäßige Ausgestaltungen des Erfindungsgegenstandes, die insbesondere eine hohe Durchlässigkeit und einfache Handhabbarkeit erfindungsgemäßer Exzenterschneckenpumpen sowie des damit durchführbaren Verfahrens gewährleisten, sind in weiteren Ansprüchen enthalten.

Die vorgenannten, sowie die beanspruchten und in den Ausführungsbeispielen genannten, erfindungsgemäß zu verwendenen Bauteile und Verfahrensschritte unterliegen in ihrer Größe, Formgestaltung, Materialauswahl und technischen Konzeptionen bzw. den Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung dazugehörigen Zeichnung, in der - beispielhaft - eine bevorzugte Ausführungsform einer erfindungsgemäßen Vorrichtung dargestellt ist. In der Zeichnung zeigen:
- Fig. 1: eine kombinierte Vorrichtung zur Koagulation, Flockulation und Entwässerung im Vertikalschnitt in schematisierter Darstellung mit Horizontalschnittdarstellungen der Exzenterschneckenpumpe in verschiedenen Höhenlagen;
- Fig. 2: einen Ausschnitt einer alternativen Ausführungsform einer Exzenterschneckenpumpe im Vertikal- und Horizontalschnitt;
- Fig. 3: ein Blockschaltbild einer mehrstufigen Entwässerungsanlage sowie
- Fig. 4: einen Ausschnitt einer weiteren alternativen Ausführungsform einer Exzenterschneckenpumpe mit porösem Stator und verjüngter Austragöffnung im Vertikalschnitt.

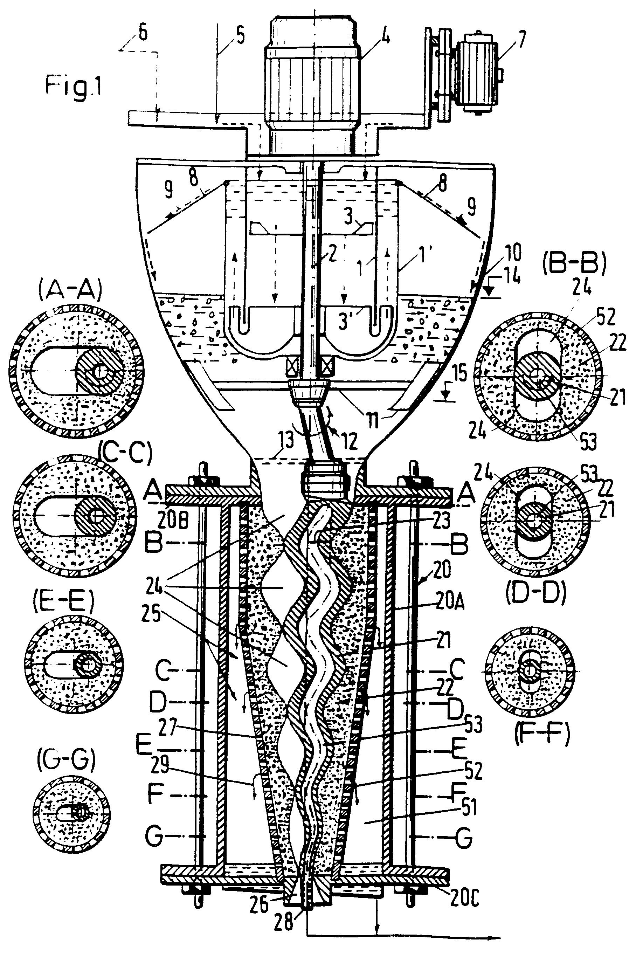

Von der in Figur 1 gezeigten Vorrichtung ist der pokalförmige obere Teil aus der deutschen Patentanmeldung P 39 43 416 nach Aufbau und Wirkungsweise bekannt. In einer Konditionierungskammer 1 wird das bei 5 aufgegebene Abwasser neben bei 6 aufgegebenen chemischen Reagenzien auch einer Strahlungseinwirkung, insbesondere akustischen Schwingungen, generiert von einem Unwuchtmotor 7 und/oder bei 3, 3' eingebrachter mechanischer Rührenergie ausgesetzt.

Das als Suspension vorliegende Abwasser 5 wird demnach von oben, nach Zusatz von beispielsweise ein Ausflocken fördernden Chemiekalien, bis zum Boden der unten offenen zylindrischen Konditionierkammer 1 geleitat, wobei die in der Flüssigkeit vorhandenen Feststoffe unter dem energetischen Potenzierungseffekt - aufgrund des durch den Unwuchtmotor 7 erzeugten Vibrierens oder Schwingens der Konditionierkammer 1 - intensiv flockuliert. Die unten offene Kontionierkammer 1 wird ergänzt durch ein siehe von unten her umschließendes becherförmiges Gefäß 1', welches mit seitlichem und unterem Abstand die Konditionierkammer umgibt und eine die Konditionierkammer konzentrisch umgegebende Ringkammer bildet, innerhalb derer das am unteren offenen Ende der Konditionierkammer austretendes Gemisch aufwärts fließt. In Umlenkbereich zwischen abwärtsgerichteter und aufwärtsgerichterer Stromung ist, wie bevorzugt, der Rührer 3' zur Einbringung mechanischer Rührenergie in das Gemisch vorgesehen.

Der freie obere Rand des Gefässes 1' ist als Überlauf für das Gemisch ausgebildet, an den sich eine nach außen unten geneigte kegelstumpfförmige Mantelflache als Überströmfläche 8 anschließt.

In der Konditioniereinheit 1, 1' befindet sich das Gemisch für eine Verweilzeit zwischen etwa zehn bis dreißig Sekunden. Von hier wird die ausgeflockte Suspension in Richtung der Pfeile 9 in einen die Konditioniereinheit und die Überströmfläche mit Abstand umgebenden pokalförmigen Sammelbehälter 10 geleitet. Dieser weist in seinem unterhalb der Konditioniereinheit gelegenen Bereich einen Rührer 11 auf.

Aufgrund der, wie bevorzugt, konzentrischen Anordnung von Konditioniereinheit und Sammelbehälter ist es möglich, die Rührer 3, 3', 11 von einem einzigen, zentral oberhalb des Sammelbehälters angeordneten, und, wie bevorzugt, von diesem mitgetragenen Antriebsmotor 4 über eine zentrale Welle 2 anzutreiben.

In der Verlängerung der zentral angeordneten Antriebswelle weist der Sammelbehälter eine ausreichend dimensonierte Auslaßöffnung 13 auf, an welche sich unmittelbar eine an den Sammelbehälter angeflanschte Exzenterschneckenpumpe 20 anschließt.

Der Motor 4 wird durch entsprechende Kontakte auf einem Pegel 14 ein - und durch entsprechende Kontakte auf einem Pegel 15 automatisch ausgeschaltet.

Die Exzenterschneckenpumpe 20 besteht aus einem zylindrischem Gehäusemantel 20A, einem damit verbundenem Gehäusedeckel 20B und einem mit dem als Flansch ausgebildeten unteren Ende des Gehäusemantels 20A verschraubbaren Gehäuseboden 20C.

Zwischen dem Gehäusedeckel 20B und dem Gehäuseboden 20C ist der Stator 22 der Exzenterschneckenpumpe befestigt, und zwar, wie bevorzugt, gedichtet eingespannt. Innerhalb des Stators 22 ist der Rotor 21 drehgelagert geordnet. Der den Rotor aufnehmende Innenraum 24 des Stators schließt an seinem oberen Ende an die Auslaßöffnung 13 des Sammelbehälters 10 unter Herstellung einer fluidischen Verbindung an. Etwa in Höhe dieser Anschlußstelle endet der Rotor, wo er über die an sich bekannte Gelenkanordnung 12 mit dem unteren Ende der Antriebswelle 2 des Motors 4 antriebsverbunden ist.

Für die Gelenkanordnung gibt es die verschiedensten, vom Antrieb von Exzenterschneckenpumpen bekannten Ausführungsformen, die zum Teil bereits in den eingangs beschriebenen Druckschriften erläutert sind und, da sie nicht zum Gegenstand vorliegender Erfindung gehören, hier auch nicht weiter erläutert werden müssen.

Wie von Exzenterschneckenpumpen bekannt, spielt der Rotor die Rolle einer Rundgewindeschraube, die gegenüber der Achsrichtung der Antriebswelle exentrisch montiert ist und über die Gelenkanordnung durch die Antriebswelle dem Motor in Rotationsbewegung gesetzt wird. Der Rotor ist also als Exzenterschnecke ausgebildet. In einem von der oben gelegener Zuströmseite der Exzenterschneckenpumpe 20 ausgehende, in der Zeichnung etwa zylindrisch dargestellten Anfangsbereich der Exzenterschneckenpumpe, weisen der Innenraum 24 des Stators die konventionelle Geometrie einer Exzenterschneckenpumpe auf, das heißt, daß der Druchmesser des Rotors und seine Gangtiefe konstant sind. Dies läßt sich sowohl im Vertikalschnitt als auch in den Horizontalschnitten A- A und B- B erkennen.

Gemäß der bekannten Exzenterschneckenpumpengeometrie weist der Stator 22, der sozusagen als Schraubenmutter ausgebildet ist, im Gegensatz zum Roter zwei Gewindegänge mit der doppelten Steigungslänge des Rotors auf. Dadurch bleiben zwischen dem Stator und dem darin sich drehenden und zusätzlich radial bewegenden Rotor Förderräume, die sich kontinuierlich von der Eintritts- zur Austrittsseite bewegen, wobei an der Eintrittsseite eine starke Saugwirkung erzeugt wirkt.

Die vorerwähnte und für Exzenterschneckenpumpen bekannte Grundgeometrie bleibt bei der Erfindung über die gesamten Pumpenlänge erhalten. Im Gegensatz zu den bekannten Exzenterpumpen ist es jedoch bevorzugt und in der Zeichnung dargestellt, daß - zumindest nach einem Anfangsabschnitt konventioneller Geometrie - sich der Durchmesser und die Gangtiefe des Rotors sowie entsprechend des Stators verändern, in dem diese Abmessungen an der Austrittsseite der Förderschnecke kleiner als an der Eintrittsseite sind. In dem dargelegten Ausführungsbeispiel nimmt das mit dem Durchmesser und der Gangtiefe einhergehendes Maß der Exzentrizität des Rotors nach den vorerwähnten Anfangsabschnitt kontinuierlich ab.

Während nun bei den bekannten Exzenterschneckenpumpen der zum Beispiel aus Gummi hergestellte Stator von einer zylindrischen geschlossenen Metallhülse stramm umgeben ist, so daß das gesamte Fördergut am Austrittsende der Förderschnecke abgefördert wird, ist es erfindungsgemäß vorgesehen, entlang der Förderstrecke der Exzenterschneckenpumpe Flüssigkeit seitlich, also quer zur allgemeinen Förderrichtung ausgetragen wird. Dies geschieht bei der in Figur 1 dargestellten Ausführungsform der Erfindung dadurch, daß der Stator 22 von dem Innenraum 24 bis zu seiner Außenwandfläche durchgehende Flüssigkeitskanäle, z.B. in Form von Poren aufweist und derart angeordnet ist, daß diese quer austretene Flüssigkeit abgeführt werden kann. Dies kann einerseits durch innerhalb des Stators vorgesehene Kanäle oder - wie dargestellt - dadurch geschehen, daß zwischen dem Gehäusemantel 20A und der äußeren Oberfläche des Stators 22 ein Sammelraum 51 vorgesehen ist.

Die mechanische Festigkeit des Stators 22 kann durch Aussteifungen unterstützt werden. Eine solche Aussteifung kann z.B. in einem durchlochten Mantel 52 aus Metall, Kunststoff oder anderen geeigneten Werkstoffen verwirklicht werden.

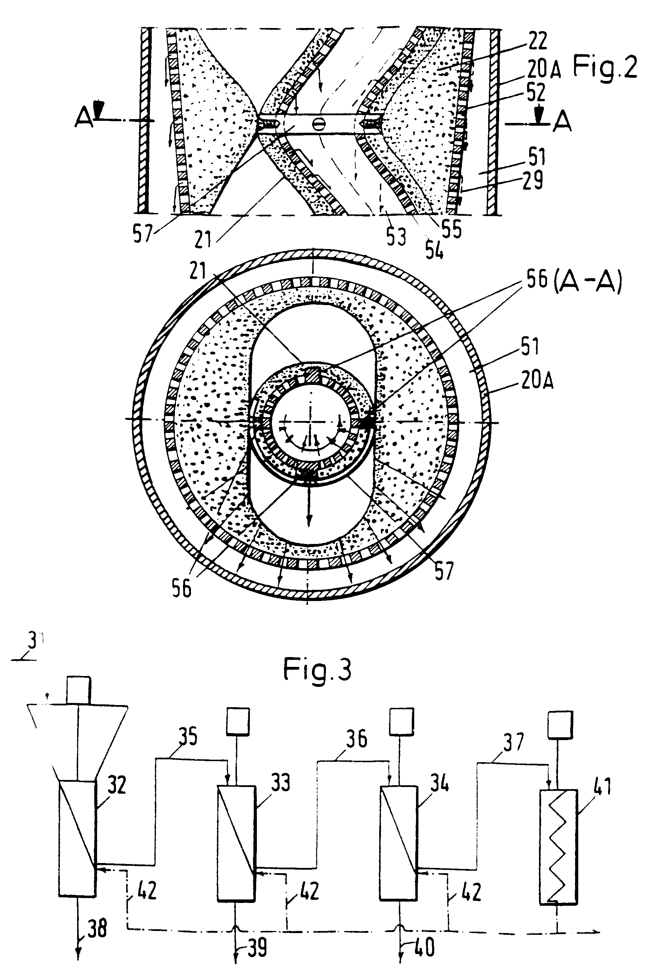

In dem Ausführungsbeispiel nach Figur 1 ist ein Kanal 53 über die gesamte Rotorlänge mit einer Mündungsöffnung 28 an der Austrittsseite der Pumpe dargestellt. Wenn bei dieser Ausführungsform auch der Rotor 21 in ähnlicher Weise wie der Stator 22 eine flüssigkeitsdurchlässige Wandung aufweist, wie dies beim Ausführungsbeispiel gemäß Figur 2 dargestellt ist, so wird die innerhalb der Exzenterschneckenpumpe erfindungsgemäß durchgeführte Filtration dadurch noch verstärkt.

Bei dem in Figur 1 dargestellten Ausführungsbeispiel wird in dem Anfangsabschnitt mit konstanten Durchmesser und konstanter Gangtiefe 23 des Rotors 21 ein gleichmäßiger Förderstrom von im wesentlichen konstanter Förderrate entstehen.

Nach etwa einem vollständigen Gewindegang des Rotors 21 wird im Fördergut ein Druck von z. B. 6 bar erzeugt. In der sich an diesem Anfangsabschnitt anschließenden Kommpressionsstufe 25, in der der Rotordurchmesser und die Gangtiefe gleichmäßig abnehmen verkleintert sich auch der zwischen Rotor und Stator verbleibende Innenraum 24 proportional bishin zur Austragsöffnung 26 der Pumpe.

Abhängig von den Filtrationscharakteristika der flockulierten Masse und des gewünschten Entwässerungsgrades bei einer konstanten Rotorsteigung und konstantem Pressungswinkel (2 alpha), kann die Zahl der Druckstufen über die gesamte Pressenlänge dementsprechend für z. B. 6 bis 150 bar variieren. Bei derart hohen Drücken können osmotisch Kräfte überwunden werden, so daß die erfindungsgemäße Exzenterschneckenpumpe als Trennungsapparat bis hinab zu molekularen Teilchengrößen verwendet werden kann. Dabei erweist es sich als Vorteil, daß die zwischen Stator und Rotor gebildeten Hohlräume sich bei der Rotation des Rotors kontinuierlich und wechselseitig öffnen und schließen, wobei der flockulierte Schlamm von der Saugseite zur Druckseite gefördert wird, wobei aufgrund der sich ergebenden permanenten Dichtlinien, die für einen totalen Abschluß zwischen Saug- und Druckseite sorgen, dieser Zustand auch im Stillstand des Rotors erhalten bleibt. Durch diesen, den Exzenterschneckenpumpen zueigenen Absöhluß zwischen Saug- und Druckseite erhält die - erfindungsgemäß auch als Presse genutzte - Exzenterschneckenpumpe eine hohe Saugfähigkeit bis etwa 9 bar, wodurch die Innenräume vollständig mit Material gefüllt werden. Dadurch wird ein sehr hoher volumetischer Wirkungsgrad bei Filtration erreicht.

Das Fördergut wird tangential entlang der Innenwandung des wie eine semipermeable Wandung ausgebildten Stators und/oder Rotors geleitet, wobei Flüssigkeit in dem Maße durch die Membran gepreßt wird, indem das Volumen des Innenraumes je Längeneinheit zum Austragsende hin abnimmt. Das durch den als Sieb 27 ausgebildten Mantel 52 austretende Permeat 29 wird in beliebiger Form gesammelt. Auf den Sammelraum 51 und den Gehäusemantel 20A kann daher grundsätzlich auch verzichtet werden.

Gemäß Figur 2 kann der Rotor grundsätzlich einen ähnlichen Materialaufbau wie der Stator aufweisen, d. h. vorzugsweise aus einer porösen, für die Flüssigkeit permeablen Membranwand 55 bestehen, die zu dem innerhalb des Rotors entlang seiner Achse verlaufenden Kanal 53 hindurch ein Stützsieb 54 mechanisch verstärkt ist, wobei zur weiteren Verstärkung Längsrippen 56 vorgesehen sein können, die mittels Schellenbändern 57 verbunden sein können.

Wie leicht nachvollziehbar, können mit der erfindungsgemäßen Vorrichtung eine Fest-Flüssig-Trennung bei gleichzeitiger Entwässerung der festen Phase vorgenommen werden, aber auch eine Fraktionierung von Stoffen mit unterschiedlichen Molekulargrößen oder eine Trennung gelöster Stoffe von ihrem Lösungsmittel oder es können Lösungen oder Suspensionen aufkonzentriert werden.

Die erfindungsgemäße Exzenterschneckenpumpe kann bereits für sich allein genommen als Filtermodul eingesetzt werden, wobei mehrere Filtermodule mit abnehmenden Porengrößen, in Reihe hintereinander verwendbar sind. So ist bei dem Ausführungsbeispiel nach Figur 3 vorgesehen, die in einem Abwasser 31 sich befindende feste Phase 38 in einem ersten Filtermodul 32 abzutrennen. Die dabei in der flüssigen Phase 35 anfallenden gelösten Stoffen 39 und 40 werden mit Hilfe nachgeschalteter erfindungsgemäßer Filtermodule 33, 34 als Monokonzentrate abgeschieden. Das nach dem dritten Filtermodul anfallende gereinigte Wasser 37 kann dann mittels einer konventionellen mehrstufigen Exzenterschneckenpumpe 41 unter hohem Druck weitergefördert werden. Wenn die Filtermodule 32, 33, 34 gelegentlich gereinigt werden sollen, findet dies mittels des gereinigten Hochdruckwassers 42 in Rückspültechnik statt, d. h. entgegengesetzt zur Filtrationsrichtung, wobei in den Poren abgelagerter Schmutz entfernt wird.

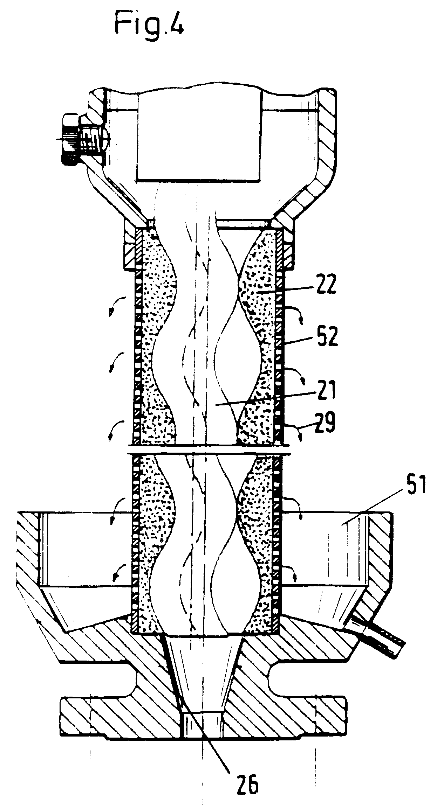

Gemäß Fig. 4 kann der Rotor 21 grundsätzlich auf der ganzen Länge einen konstanten Durchmesser und konstante Gangtiefe haben, wobei für den Austritt der Flüssigkeit, der Stator 22 aus einer permeablen Membran (Wandung) besteht. In diesem Fall wird die Erzeugung eines hydraulischen Widerstandes der Pumpe durch eine Verringerung des Durchmessers der Austragsöffnung 26 gewährleistet.

Für die flüssigkeitspermeablen Wendungen des Stators und/oder Rotors werden z. B. zwei Komponentenfasern, nämlich mit Polyäthylen ümhüllte Polypropylenphasern, wie sie unter der Handelsbezeichnung "BETAPURE®" bekannt sind, oder vergleichbare Feserwerkstoffe verwendet, wenn der Verwendungszweck die Vorfiltration oder Ultrafiltration des zu behandelnden Gemisches ist. Wenn derartige Faserfilter in Patronenform hergestellt werden, d. h. im vorliegenden Fall mit der entsprechenden Geometrie von Stator beziehungsweise Rotor, so ergeben sich an der Innenraumseite sehr hohe Dichten von miteinander verschweißten Fasern, die eine sehr feste Struktur darstellen und Differenzdrücke von 5,5 bar zulassen. Die Porenstruktur läst sich dabei gut kontollieren. Bei Größen der abzuscheidenen Teilchen zwische 1 und 100 »m ergeben sich dabei hohe Permeabilitäten, vergleichsweise niedrige Druckverluste und hohe Durchflußraten. Die tiefe und homogene Porenstruktur, die chemische Beständigkeit, die hohe Druckbeständigkeit und Festigkeit, verbunden mit einer gewissen Elastizität gibt solchen Patronen lange Haltbarkeit und eine hohe Schmutzaufnahme-Kapazität.

Für Industrieabwässer, die durch Ultrafiltration nicht entgiftet werden können, ist eine Mikrofiltration erforderlich, wobei dann als semipermeable Wandung z. B. Polyolefinmembranen, wie sie als "Memcor-System®" bekannt sind, mit einer festgelegten Porengröße von z. B. 0,2 »m verwendet. Auf der Außenseite dieser hautartigen Schicht liegt eine schwammartige poröse Schutzschicht mit kontinuierlich zunehmender Porenzahl und Porendurchmesser, wodurch in der Tiefe eine hochpermeable Schicht gebildet wird (siehe Figur 2). Dadurch wird es möglich, alle in Suspension befindlichen Bestandteile, z. B. Bakterien, Kolloide, Schwermetallionen, Nitrate usw. aus Flüssigkeiten zu separieren. Aus den konventionellen Systemen zur Makro- und Mikrofiltration oder zur Umkehrosmose bekannte Membranen können in der erfindungsgemäßen Exzenterschneckenpumpe ebenfalls Anwendung finden.

Im Vergleich zu konventionellen Filtrationsapparaten wird durch die Erfindung z. B. erreicht, daß die erfindungsgemäßen Filtermodule mehrere parallel laufende Prozesse übernehmen können, so die kontinuierliche Umwälzung und Förderung des Gutes von der Eintritts- zur Austrittsöffnung, die Erzeugung eines für die Filtration ausreichend hohen Druckes von/bis z. B. 150 bar sowie die Durchführung von Makro- oder Mikrofiltration unter Erhalt von gereinigten, gegebenenfalls Handelsfähigen Endprodukten. Außerdem ist die Leistung erfindungsgemäßer Filtermodule im Vergleich zu konventionellen Sedimentationsanlagen mit nachgeschalteten Filterpressen außerordentlich hoch.

## Patentansprüche

1. Vorrichtung zum Aufkonzentrieren oder zur Trennung von insbesondere festen bzw. koagolierten oder anderen Inhaltsstoffen von Flüssigkeiten mit einem Schneckenförderer
**dadurch gekennzeichnet, daß**
der Schneckenförderer aus einer Exzenterschneckenpumpe (20) besteht, bei der der Stator (22) als für die Flüssigkeit permeable Wandung ausgebildet ist.

2. Vorrichtung zum Aufkonzentrieren oder zur Trennung von insbesondere festen bzw. koagolierten oder anderen Inhaltsstoffen von Flüssigkeiten mit einem Schneckenförderer, insbesondere nach Anspruch 1,
**dadurch gekennzeichnet, daß**
der Schneckenförderer aus einer Exzenterschneckenpumpe (20) besteht, bei der der Rotor (21) als Hohlkörper mit einer für die Flüssigkeit permeablen Wandung und einem Kanal (53) zum Abführen der Flüssigkeit ausgebildet ist.

3. Vorrichtung nach Anspruch 1 oder 2, dadurch gekennzeichnet, daß der Durchmesser und die Gangtiefe des Rotors (21) sowie entsprechend des Stators (22) von der Eintrittsseite (Öffnung 13) zur Austrittsseite (Austragsöffnung 26) der Förderschnecke (Rotor 21) abnehmen.

4. Vorrichtung nach einem der Ansprüche 1 bis 3, dadurch gekennzeichnet, daß das Meß der Exzentrizität des Rotors (21) und des Stators (22) von der Eintritts- zur Austrittsseite der Förderschnecke kontinuierlich abnimmt.

5. Vorrichtung nach einem der Ansprüche 1 bis 4, dadurch gekennzeichnet, daß Stator und Rotor in einem Anfangsabschnitt der Exzenterschneckenpumpe gemäß der ansich bekannten Geometrie mit über die Länge konstantem Durchmesser und konstanter Gangtiefe des Rotors und entsprechend des Stators ausgestattet ist.

6. Vorrichtung nach einem der Ansprüche 1 bis 5, dadurch gekennzeichnet, daß der Stator (22) oder der Rotor (21) oder beide als mikroporöse semipermeable Membranen ausgebildet sind.

7. Vorrichtung nach einem der Ansprüche 1 bis 6, dadurch gekennzeichnet, daß der Stator oder der Rotor oder beide aus einem Faserwerkstoff, insbesondere auf der Basis von Zweikomponenten- Fasern besteht/bestehen.

8. Vorrichtung nach einem der Ansprüche 1 bis 6, dadurch gekennzeichnet, daß der Stator oder der Rotor oder beide aus einer porösen Membran, insbesonder aus Polyolefin, besteht, auf deren Außenseite eine schwammartige poröse Schicht mit nach außen hin zunehmender Porenzahl und/oder Porendurchmesser besteht/bestehen.

9. Vorichtung nach einem der Ansprüche 5 bis 8, dadurch gekennzeichnet, daß die Porengröße oder die Porendichte oder beide von Innenraum (24) der Pumpe zur gegenüberliegenden Wandungsfläche des Stators bzw. Rotors hin, insbesondere kontinuierlich, zunimmt.

10. Vorrichtung nach einem der Ansprüche 1 bis 9, dadurch gekennzeichnet, daß der Stator oder der Rotor oder beide auf ihrer Abströmfläche für Flüssigkeit mit flüssigkeitsdurchlässigen Aussteifungsmitteln, wie einem Sieb (52 oder 54), oder Längsrippen (56) sowie ggf. Schellenbänder (57) versteift sind.

11. Verfahren zum Aufkonzentrieren oder zur Trennung von insbesondere festen bzw. koagolierten oder anderen Inhaltsstoffen von Flüssigkeiten mit einem Schneckenförderer
**gekennzeichnet durch**
die Verwendung einer Exzenterschneckenpumpe (20) nach einem der Ansprüche 1 bis 10.

12. Verfahren nach Anspruch 11, dadurch gekennzeichnet, daß die flüssigkeitspermeablen Wandungen von Rotor oder Stator oder beiden von Zeit zu Zeit durch Umkehrspülen unter Druck gereinigt werden.

## Claims

1. A device for concentrating or separating components, in particular solid or coagulated components or other components, from liquids by a screw conveyor, **characterized in that** the screw conveyor comprises an eccentric screw pump (20) in which the stator (22) is constructed as a wall permeable by the liquid.

2. A device for concentrating or separating components, in particular solid or coagulated components or other components, from liquids by a screw conveyor, in particular according to Claim 1, **characterized in that** the screw conveyor comprises an eccentric screw pump (20) in which the rotor (21) is constructed as a hollow member with a wall permeable by the liquid and a duct (53) for removing the liquid.

3. A device according to Claim 1 or 2, **characterized in that** the diameter and the depth of thread of the rotor (21) and accordingly those of the stator (22) decrease from the inlet end (opening 13) to the outlet end (discharge opening 26) of the conveyor screw (rotor 21).

4. A device according to one of Claims 1 to 3, **characterized in that** the degree of the eccentricity of the rotor (21) and of the stator (22) decreases continuously from the inlet end to the outlet end of the conveyor screw.

5. A device according to one of Claims 1 to 4, **characterized in that** in accordance with the geometry known *per se* the stator and the rotor [are] provided in a starting portion of the eccentric screw pump with a diameter and a depth of thread of the rotor and accordingly of the stator which are constant over their length.

6. A device according to one of Claims 1 to 5, **characterized in that** the stator (22) or the rotor (21) or both are constructed as microporous semi-permeable membranes.

7. A device according to one of Claims 1 to 6, **characterized in that** the stator or the rotor or both consists or consist of a fibre material, in particular based on two-component fibres.

8. A device according to one of Claims 1 to 6, **characterized in that** the stator or the rotor or both consists or consist of a porous membrane, in particular of polyolefin, on the outside of which [there is] a sponge-like porous layer with the number and/or the diameter of the pores increasing towards the outside.

9. A device according to one of Claims 5 to 8, **characterized in that** the size or the density of the pores or both increases from the interior (24) of the pump towards the opposite wall face of the stator or the rotor, and in particular increases continuously.

10. A device according to one of Claims 1 to 9, **characterized in that** the stator or the rotor or both is or are reinforced on their discharge face for liquid with liquid-permeable reinforcement means, such as a screen (52 or 54) or longitudinal ribs (56) and where appropriate clamp bands (57).

11. A process for concentrating or separating components, in particular solid or coagulated components or other components, from liquids by a screw conveyor, **characterized by** the use of an eccentric screw pump (20) according to one of Claims 1 to 10.

12. A process according to Claim 11, **characterized in that** the liquid-permeable walls of the rotor or stator or both are periodically cleaned by reverse scavenging under pressure.

## Revendications

1. Dispositif pour la concentration ou la séparation en particulier de substances solides respectivement coagulées ou autres de liquides avec une convoyeuse à vis,
caractérisé en ce que
la convoyeuse à vis se compose d'une pompe à vis excentrique (20) dont le stator (22) présente une paroi perméable au fluide.

2. Dispositif pour la concentration ou la séparation en particulier de substances solides respectivement coagulées ou autres de liquides avec une convoyeuse à vis, en particulier selon la revendication 1,
caractérisé en ce que
la convoyeuse à vis se compose d'une pompe à vis excentrique (20) dont le rotor (21) se présente comme un corps creux doté d'une paroi perméable au fluide et d'un canal (53) pour l'évacuation du liquide.

3. Dispositif selon la revendication 1 ou 2, caractérisé en ce que le diamètre et la profondeur de pas du rotor (21) et en conséquence du stator (22) diminuent depuis l'entrée (orifice 13) à la sortie (orifice de décharge 26) de la vis convoyeuse (rotor 21).

4. Dispositif selon l'une des revendications 1 à 3, caractérisé en ce que la mesure de l'excentricité du rotor (21) et du stator (22) diminue continuellement de l'entrée à la sortie de la vis convoyeuse.

5. Dispositif selon l'une des revendications 1 à 4, caractérisé en ce que le stator et le rotor sont dotés, dans une section de départ des pompes à vis excentrique, selon une géométrie connue en soi, d'une profondeur de pas constante et d'un diamètre constant sur la longueur du rotor et du stator.

6. Dispositif selon l'une des revendications 1 à 5, caractérisé en ce que le stator (22) ou le rotor (21), ou bien les deux font office de membrane semi-perméable microporeuse.

7. Dispositif selon l'une des revendications 1 à 6, caractérisé en ce que le stator ou le rotor, ou bien les deux se composent d'une membrane fibreuse, en particulier sur la base de fibres à deux composants.

8. Dispositif selon l'une des revendications 1 à 6, caractérisé en ce que le stator ou le rotor, ou bien les deux se composent d'une membrane poreuse, en particulier en polyoléfine, sur la face externe de laquelle une couche poreuse comme une éponge se compose d'un nombre de pores et/ou d'un diamètre de pore augmentant vers l'extérieur.

9. Dispositif selon l'une des revendications 5 à 8, caractérisé en ce que la taille des pores et leur densité ou les deux augmentent depuis l'intérieur (24) de la pompe en direction de la surface de paroi opposée du stator respectivement du rotor et, ce, particulièrement en continu.

10. Dispositif selon l'une des revendications 1 à 9, caractérisé en ce que le stator ou le rotor ou les deux sont raidis, sur leur surface d'écoulement du liquide, par des moyens raidisseurs perméables au liquide, à la manière d'un tamis (52 ou 54) ou de nervures longitudinales (56) ainsi qu'éventuellement de bandes de colliers (57).

11. Procédé pour la concentration ou la séparation en particulier de substances solides respectivement coagulées ou autres de liquides avec une convoyeuse à vis, caractérisé par l'emploi d'une pompe à vis excentrique (20) selon l'une des revendications 1 à 10.

12. Procédé selon la revendication 11, caractérisé en ce que les parois du rotor ou du stator, perméables au fluide ou bien des deux, doivent être nettoyées de temps en temps sous pression par inversion de courant.
